# EUROPÄISCHE PATENTSCHRIFT

(11) **EP 3 561 207 B1**
(45) Veröffentlichungstag und Bekanntmachung des Hinweises auf die Patenterteilung: **02.11.2022**
(21) Anmeldenummer: 19168556.9
(22) Anmeldetag: 11.04.2019
(51) Int. Cl.: E05D 5/02, F16B 12/44

(54) **VERBINDUNGSMITTEL UND MÖBELTEIL**
CONNECTING MEANS AND PIECE OF FURNITURE
MOYEN DE RACCORDEMENT ET PARTIE DE MEUBLE

(30) Priorität: 17.04.2018 DE 202018102085 U
(43) Veröffentlichungstag der Anmeldung: 30.10.2019
(73) Patentinhaber: Grass GmbH, 64354 Reinheim (DE)
(72) Erfinder: Krüdener, Boris, 63801 Kleinostheim (DE); Lautenschläger, Sebastian, 64342 Seeheim-Jugenheim (DE)
(74) Vertreter: Otten, Roth, Dobler & Partner mbB Patentanwälte

(56) Entgegenhaltungen:
- CH-A2- 705 813
- DE-U- 7 238 739
- US-A- 3 949 526
- US-A1- 2008 042 531
- US-B1- 6 266 848

## Beschreibung

### Stand der Technik

Es sind Verbindungsmittel bekannt, mit denen zwei Rahmenelemente eines Möbelteil-Rahmens eines Möbelteils in Rahmentechnik verbindbar sind. Die Verbindungsmittel umfassen z. B. ein Eckverbindungsorgan für die Verbindung von jeweiligen Endabschnitten der zwei Rahmenelemente, die in einem Eckbereich des Rahmens zusammentreffen.

Die Verbindungsmittel kommen zum Beispiel bei Möbelteilen zum Einsatz, welche einen Profilrahmen aus mehreren Rahmenprofilen aufweisen, wobei die Rahmenprofile miteinander mit den Verbindungsmitteln verbunden sind. US 2008/042531 A1 offenbart ein Beispiel eines solchen Verbindungsmittels.

Die Eckverbindungsorgane sind bei einem fertigen Profilrahmen insbesondere zumindest teilweise in den Rahmenelementen versenkt untergebracht.

Der Möbelteil-Rahmen aus zum Beispiel Metall-Hohlprofilen umrandet einen Innenbereich des Möbelteils zum Beispiel aus Glas oder einem anderen Material.

Das Möbelteil ist zum Beispiel eine Türe oder Klappe, beispielsweise eine Alurahmen-Türe oder eine Alurahmen-Klappe wie eine Oberklappe eines Oberklappenschranks. Die Oberklappe ist beispielsweise mit einer entsprechenden Vorrichtung zum Schwenken wie einem Oberklappenbeschlag bestehend aus einer oder zwei Beschlageinheiten verschwenkbar an einem Möbelkorpus des Oberklappenschranks angebracht.

Die Vorrichtung zur Bewegung des Möbelteils umfasst Führungsmittel mit zumindest einem Schwenkarm zum Schwenken des Möbelteils, mit welchen bei montierter Vorrichtung das Möbelteil aus einer Schließposition in eine Offenposition des Möbelteils relativ zum Möbelkorpus und zurück bewegbar ist. Ein entsprechend einschlägiger Stand der Technik ist aus den Dokumenten US 2008/0042531 A1 und DE 7238739 bekannt.

### Aufgabe und Vorteile der Erfindung

Aufgabe der vorliegenden Erfindung ist es, die Anbindung eines Möbelteils in Rahmenbauweise an eine Vorrichtung zum Bewegen des Möbelteils relativ zu einem Möbelkorpus zu verbessern. Insbesondere soll dies vorteilhaft ohne zusätzliche Bauteile an bisherigen Möbelteilen in Rahmenbauweise möglich sein.

Diese Aufgabe wird durch ein Verbindungsmittel nach Anspruch gelöst.

Die abhängigen Ansprüche betreffen vorteilhafte und zweckmäßige Weiterbildungen der Erfindung.

Die Erfindung geht aus von Verbindungsmitteln, mit denen zwei Rahmenelemente eines Möbelteil-Rahmens eines Möbelteils verbindbar sind, wobei die Verbindungsmittel ein Eckverbindungsorgan für die Verbindung von jeweiligen Endabschnitten der zwei Rahmenelemente in einem Eckbereich des Möbelteil-Rahmens umfasst. Das Möbelteil ist vorzugsweise in Rahmenbauweise hergestellt.

Am Eckverbindungsorgan ist ein Anbindungsabschnitt für die Anbindung zu einer Schwenkvorrichtung integriert, wobei das Möbelteil mittels der Schwenkvorrichtung schwenkbar an einem Möbelkorpus eines Möbels aufnehmbar ist.

Gegenüber bisherigen Eckverbindungsorganen kann an dem ohnehin vorhandenen Eckverbindungsorgan des Möbelteils bzw. kann mit minimalem Zusatzaufwand die Anbindung an die Schwenkvorrichtung platzsparend und effektiv realisiert werden.

Der Anbindungsabschnitt andererseits ist ein ebenfalls ohnehin bislang benötigtes Bauteil der Schwenkvorrichtung, das zur Anbringung der Schwenkvorrichtung bzw. z. B. eines Oberklappenbeschlags an dem schwenkbaren Möbelteil notwendig ist. Der Anbindungsabschnitt kann an einem bestehenden Eckverbindungsorgan vorteilhaft bzw. daran vorbereitet integriert bzw. daran befestigt ausgebildet werden. Die Verknüpfung des Anbindungsabschnitts mit dem Eckverbinder ist aus mechanischen und praktischen Gründen vorteilhaft. Der Eckbereich stellt einen Randbereich des Möbelteils dar und ist daher geeignet für einen nicht störenden Angriff der Schwenkvorrichtung. Außerdem stellen bei Hohlprofilen die Eckbereiche des Möbelteil-Rahmens jeweils Bereich mit erhöhter mechanischer Stabilität bereit, weil der Eckverbinder in dem Eckbereich zusätzliche Stabilität liefert, gegenüber den restlichen Bereichen des Möbelteil-Rahmens, in denen kein Eckverbinder vorhanden bzw. in deren Inneren kein Element eingesteckt ist, also hohl ist. Die gegenüber hohlen Bereichen erhöhte Stabilität im Eckbereich des Möbelteil-Rahmens ist daher vorteilhaft für die Verbindung mit dem Anbindungsabschnitt bzw. mit der Schwenkvorrichtung.

Der Anbindungsabschnitt ist vorzugsweise lösbar integriert am Eckverbindungsorgan bzw. ist Teil des Eckverbindungsorgans. Vorzugsweise ist der Anbindungsabschnitt als Montageeinheit ausgestaltet, wobei die Montageeinheit bei bekannten Schwenkvorrichtungen für die Anbringung an einer Flächenseite des Möbelteils vorgesehen ist.

Die Schwenkvorrichtung ist insbesondere als Oberklappenbeschlag für Oberschränke ausgebildet. Die Schwenkvorrichtung umfasst insbesondere eine korpusseitige Basiseinheit, Führungsmittel mit einer Schwenkarm-Anordnung, vorzugsweise mit einem Kraftspeicher und/oder einer Dämpfanordnung, und eine klappenseitige Montageeinheit.

Bei größeren zu bewegenden Möbelklappen müssen die Bauteile der Bewegungsvorrichtung ausreichend stabil ausgestaltet sein. Für einen hohen Bedienkomfort ist insbesondere eine Kraftunterstützung mit dem Kraftspeicher für die Öffnungsbewegung bzw. die Dämpfanordnung zur gedämpften Schließbewegung des Möbelteils vorgesehen. Bei zwei Beschlageinheiten zwischen dem Möbelkorpus und dem Möbelteil sind vorzugsweise an beiden Beschlageinheiten die erfindungsgemäßen Verbindungsmittel wirksam.

Bevorzugt ist der Anbindungsabschnitt lösbar angebracht an dem Eckverbindungsorgan vorhanden. Insbesondere ist der Anbindungsabschnitt an einem einstückigen Eckverbindungsorgans angebracht. Damit kann man flexibel die Anbindungsmöglichkeit wahlweise einrichten oder weglassen. Eine einstückige Ausbildung ist nicht ausgeschlossen, wobei das Eckverbindungsorgan inklusive bzw. integral mit dem Anbindungsabschnitt gestaltet ist.

Weiter ist es vorteilhaft, dass das Eckverbindungsorgan einen Grundkörper umfasst, an dem der Anbindungsabschnitt aufgenommen ist. Vorzugsweise weist der Grundkörper einen vorbereiteten Abschnitt wie z. B. eine Anschrauböffnung zur vorzugsweise lösbaren Anbringung des Anbindungsabschnitts auf. Der Grundkörper ist insbesondere ausgestaltet, die beiden Endabschnitte der zwei zu verbindenden Rahmenelemente zu verbinden.

Ein Vorteil der Erfindung ergibt sich, wenn der Anbindungsabschnitt auf einer Seite des Grundkörpers angebracht ist, welche zu einer Innenseite des mit den Rahmenelementen bildbaren Möbelteil-Rahmens des Möbelteils gerichtet ist. Damit ist auf der betreffenden Seite des Grundkörpers des Eckverbindungsorgans auch der Anbindungsabschnitt vorgesehen. Vorteilhafterweise zeigt diese Seite zum Möbelkorpus hin und ist daher geeignet, mit einem Ende der Schwenkvorrichtung verbunden zu werden. Die Schwenkvorrichtung ist mit dem anderen Ende ausgestaltet, mit dem Möbelkorpus verbunden zu werden.

Vorteilhaft ist es auch, wenn der Grundkörper einen ersten länglichen Arm und einen zweiten länglichen Arm umfasst, wobei der erste Arm winklig zu dem zweiten Arm ausgerichtet ist. Vorzugsweise ist der Anbindungsabschnitt an nur genau einem der beiden Arme vorhanden, insbesondere vorzugsweise nicht im winkligen Bereich, der die beiden Arme verbindet.

Der Grundkörper ist ausgebildet, dass ein jeweiliger Arm mit einem jeweils zugehörigen Rahmenelement verbindbar ist. Im verbundenen Zustand der beiden Rahmenelemente sind die Arme jeweils vorzugsweise vollständig versenkt in einem Inneren der Rahmenelement untergebracht. Bevorzugt ist an jedem Arm eine Befestigungsmöglichkeit zur Befestigung mit dem jeweils zugeordneten Rahmenelement vorgesehen, z. B. eine Schrauböffnung oder ein Steckbereich. Die beiden Arme stehen vorzugsweise rechtwinklig zueinander. Einer der beiden Arme weist z. B. einen zu benachbarten Abschnitten vertieften Abschnitt auf, wobei am vertieften Abschnitt der Anbindungsabschnitt angebracht ist oder diesen umfasst. Dies ist besonders platzsparend.

Das Eckverbindungsorgan ist zur Unterbringung in einem Innenvolumen der zu verbindenden zwei Rahmenelemente des Möbelteil-Rahmens ausgestaltet. Damit können hohle Rahmenelemente bzw. hohle Endabschnitte der Rahmenelemente vorteilhaft verbunden werden. Bevorzugt ist insbesondere der jeweilige Arm in einem Innen- bzw. Hohlraum der Rahmenelemente bzw. deren Endabschnitte einsteckbar. Dies ermöglicht einen unkomplizierten Zusammenbau des Möbelteil-Rahmens aus den einzelnen Rahmenelementen. Vorzugsweise ist das Eckverbindungsorgan auf einer Außenseite des Möbelteils nichts zu sehen.

Erfindungsgemäß zeichnet sich die Erfindung dadurch aus, dass der Anbindungsabschnitt am Eckverbindungsorgan zwei vorstehende Kontaktabschnitte umfasst und die vorstehenden Kontaktabschnitte lassen sich ohne Mühe mit einem Gegenabschnitt in Form eines Rastabschnitts der Schwenkvorrichtung verbinden, zum Beispiel lösbar verrasten, um eine Rastverbindung einzurichten. Mit zwei Kontaktabschnitten kann eine kompakte und gleichzeitig vergleichsweise stabile Verbindung bzw. Zweipunktverbindung eingerichtet werden.

Erfindungsgemäß sind Einstellmittel zur Einstellung einer Höhenposition und/oder einer Seitenposition des Anbindungsabschnitts am Eckverbindungsorgan vorhanden. Damit ist der Anbindungsabschnitt verstellbar relativ zum Eckverbindungsorgan und damit bei dem fertigen Möbel das Möbelteil relativ zur Schwenkvorrichtung und damit relativ zum Möbelkorpus einstellbar. Dies ermöglicht eine exakte bzw. gewünschte Positionierung des Möbelteils am Möbel bzw. relativ zum Möbelkorpus, was aus optischen Gründen vorteilhaft ist. Das Möbelteil kann damit in vertikaler und/oder in horizontaler Richtung mittig bezüglich einer Frontseite des Möbelkorpus gebracht werden. Auch eine Einstellung einer Tiefenposition des Anbindungsabschnitts am Eckverbindungsorgan ist alternativ oder zusätzlich möglich.

Ein weiterer Vorteil ist darin zu sehen, dass die Einstellmittel ein in den Grundkörper einschraubbares Schraubelement umfassen, das durch einen Führungsabschnitt wie ein Langloch in dem Anbindungsabschnitt greift. Dies ist einfach einzurichten und bedeutet eine leicht bedienbare Verstellmöglichkeit zum Beispiel mit einem Schraubendreher. Vorzugsweise ist für die jeweilige horizontale und vertikale Positionierung oder Tiefeneinstellung jeweils ein Exzenter-Schraubelement mit jeweils einem zugehörigen Führungsabschnitt bzw. Langloch vorgesehen. Das eine Schraubelement dient dabei zur Seiteneinstellung und das andere Schraubelement dient zur Höheneinstellung. Die Schraubelemente sind vorzugsweise so vorhanden, dass die Schraubelemente gleichzeitig die Verbindung des Anbindungsabschnitts mit dem Grundkörper bereitstellen.

Ein anderer Vorteil besteht darin, dass der Anbindungsabschnitt als ein längliches Winkelelement mit zwei winklig zueinander stehenden Schenkeln ausgebildet ist, wobei ein erster Schenkel des Winkelelements die beiden vorstehende Kontaktabschnitte aufweist und an einem zweiten Schenkel des Winkelelements die Einstellmittel zur Einstellung der Höhenposition und/oder Seitenposition des Anbindungsabschnitts am Eckverbindungsorgan wirksam sind. Dies ist besonders kompakt bauend. Beispielsweise stehen die Kontaktabschnitte in einer Linie bzw. fluchtend und beabstandet zueinander am zugehörigen Schenkel des Winkelelements. Der zweite Schenkel ist vorzugsweise an einer auf das Möbelteil bezogen innenliegenden Seite des Eckverbindungsorgans befestigt.

Die Erfindung erstreckt sich auch auf ein Möbelteil mit einem aus wenigstens zwei Rahmenelementen gebildeten Möbelteil-Rahmen, der einen Flächenbereich des Möbelteils umrandet, wobei die Rahmenelemente mit Verbindungsmitteln nach einer der oben beschriebenen Ausgestaltung verbunden sind. Damit lassen sich die entsprechenden Vorteile an dem Möbelteil wie einer schwenkbaren Möbelklappe mit einem Rahmen und einem darin aufgenommenen Innenelement zum Beispiel mit einem Alurahmen mit Glaseinsatz erzielen.

Vorteilhaft weisen die Rahmenelemente Hohlprofilabschnitte auf, wobei die Verbindung der Rahmenelemente mit den Verbindungsmitteln im Bereich der Hohlprofilabschnitte eingerichtet ist. Damit lassen sich die Rahmenelemente kompakt verbinden, ohne dass die Verbindung am Rahmen sichtbar ist. Die Rahmenelemente sind vorzugsweise durchgehend hohle Profile, welche zur Bildung des Möbelteil-Rahmens auf die gewünschte länge gebracht werden und zur winkligen Eckverbindung mit Gehrung auf Stoß eine zur Längsachse winklig stehende Stirnseite aufweisen. Im Eckbereich ist innerhalb der beiden Rahmenelemente das Eckverbindungsorgan eingesteckt.

### Figurenbeschreibung

Weitere Merkmale und Vorteile der Erfindung sind anhand von in den Figuren schematisch dargestellten Ausführungsbeispielen näher erläutert. Im Einzelnen zeigt:
- Fig. 1: eine perspektivische Ansicht auf ein Möbel mit einem erfindungsgemäßen Möbelteil in Rahmentechnik mit einem Möbelteil-Rahmen,
- Fig. 2: den in Fig. 1 umrandeten Bereich A in vergrößerter Darstellung,
- Fig. 3: ein beispielhaftes Eckverbindungsorgan der erfindungsgemäßen Verbindungsmittel in perspektivischer Ansicht schräg von oben,
- Fig. 4: das Eckverbindungsorgan aus Fig. 3 in Draufsicht,
- Fig. 5: einen perspektivischen Ausschnitt eines Eckbereichs des Möbelteil-Rahmens des Möbelteils aus Fig. 1 mit zwei Rahmenelementen, welche mit dem Eckverbindungsorgan aus Fig. 3 verbunden sind,
- Fig. 6: den Eckbereich des Möbelteil-Rahmens gemäß Fig. 5 in Draufsicht und
- Fig. 7: ein unterbrochen dargestelltes alternatives erfindungsgemäßes Möbelteil in einer Ansicht auf die Innenseite des Möbelteils.

Für sich entsprechende Elemente unterschiedlicher Ausführungsbeispiele sind nachfolgend teils die gleichen Bezugszeichen verwendet.

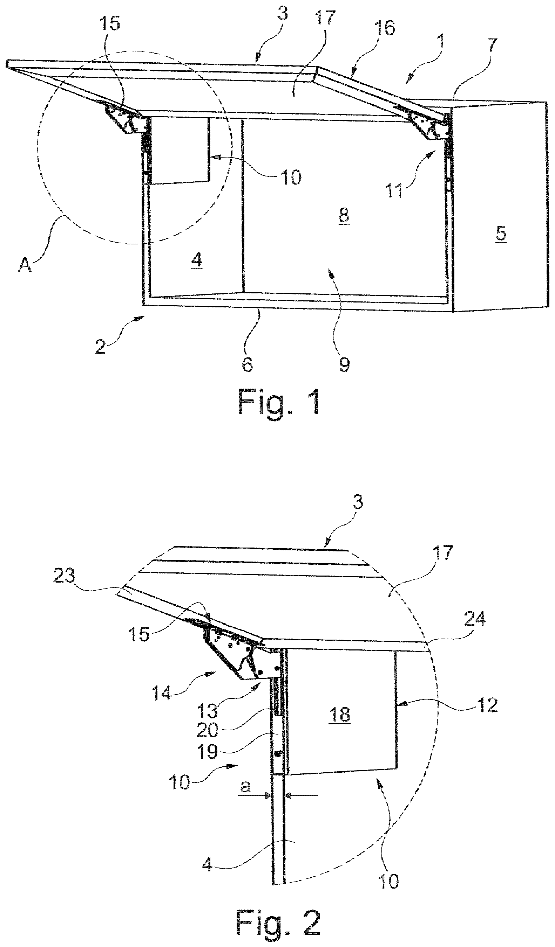

Fig. 1 zeigt perspektivisch ein Möbel bzw. einen Oberschrank 1 in einer Nutzstellung mit einem kastenförmigen Möbelkorpus 2 und einem daran aufgenommenen erfindungsgemäßen Möbelteil, das als eine Oberklappe 3 ausgebildet ist, welche in einer Offenstellung relativ zum Möbelkorpus 2 gezeigt ist. Das Möbelteil bzw. die Oberklappe 3 weist einen Möbelteil-Rahmen 16 aus vier vorzugsweise untereinander in identischer Profilform gebildeten Rahmenelementen zum Beispiel aus Aluminium auf. Der Möbelteil-Rahmen 16 ist in Rahmentechnik zusammengebaut bzw. dessen Rahmenelemente sind in Rahmenbauweise zusammengesetzt. Die Oberklappe 3 weist außerdem ein am Möbelteil-Rahmen 16 aufgenommenes Innenelement 17 zum Beispiel eine Glasplatte auf, wobei das Innenelement 17 von dem Möbelteil-Rahmen 16 umrandet bzw. umschlossen ist.

Der Möbelkorpus 2 umfasst zwei gegenüberliegende aufrechte Seitenwände 4 und 5, die unten mit einem Unterboden 6 und oben mit einem Oberboden 7 verbunden sind. Rückseitig ist der Möbelkorpus 2 von einer Rückwand 8 verschlossen.

Zur Bewegung der Oberklappe 3 um eine horizontale Schwenkachse relativ zum Möbelkorpus 2 aus der in Fig. 1 gezeigten Offenstellung in eine zum Möbelkorpus 2 frontseitig heranbewegte Schließstellung (nicht gezeigt) und zurück in die Offenstellung ist eine Bewegungsvorrichtung vorhanden, die als Oberklappenbeschlag 9 ausgestaltet ist. Der Oberklappenbeschlag 9 weist an der Seitenwand 4 eine erste Beschlageinheit 10 und an der Seitenwand 5 eine zweite Beschlageinheit 11 auf, die gleichartig aber zur funktionsrichtigen Anordnung an der jeweiligen Seitenwand 4 bzw. 5 seitenbezogen aufgebaut sind.

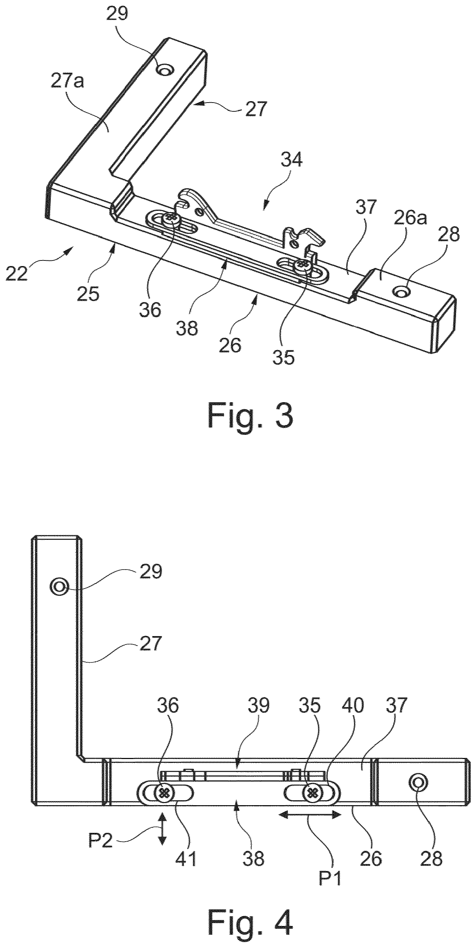

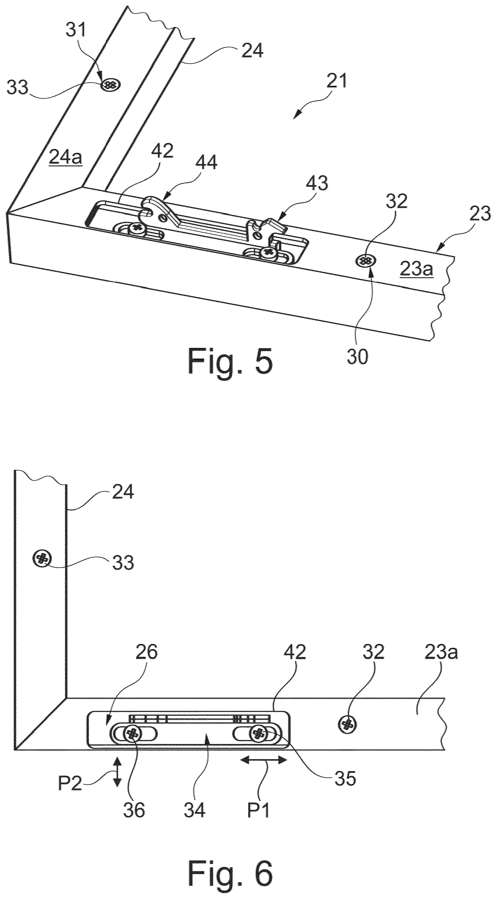

Jede Beschlageinheit 10 und 11 umfasst eine Basiseinheit 12, Führungsmittel 13 mit einer Schwenkarm-Anordnung 14 und einen Anbindungsabschnitt der zum Beispiel als Montageeinheit 15 ausgebildet ist. Der Anbindungsabschnitt bzw. die Montageeinheit 15 ist an einem Eckverbindungsorgan 22 integriert (s. Fig. 3-6), was weiter unten im Detail erläutert ist. Über mehrere gelenkig gelagerte Schwenkarme der Schwenkarm-Anordnung 14 ist die Basiseinheit 12 mit der Montageeinheit 15 verbunden. Die Montageeinheit 15 ist fest aber lösbar innenseitig an der Oberklappe 3 bzw. dem Möbelteil-Rahmen 16 befestigt ist.

Die Basiseinheit 12 ist vorzugsweise aus einem Blechbauteil gebildet und umfasst eine ebene, flache bzw. dünne Grundplatte und ein zur Grundplatte gegenüberliegendes flaches dünnes Gehäuseelement. Das Gehäuseelement ist mit einem Abdeckelement 18 bzw. einer Abdeckplatte abgedeckt.

Außerdem ist stirnseitig an der Basiseinheit 12 ein Stirnabschnitt 19 vorhanden, dessen Außenseite quer zur Ebene der Grundplatte ausgerichtet ist. Durch eine rechteckförmige Aussparung 20 in dem Stirnabschnitt 19 greifen die betreffenden Schwenkarme der Schwenkarm-Anordnung 14. Die Breite des als Ansteckbauteil ausgebildeten Stirnabschnitts 19 entspricht einer üblichen Breite a der Seitenwand 4 von z. B. 16 Millimetern. Die Gesamtbreite bzw. Dicke der Beschlageinheiten 10 und 11 beträgt circa 12 Millimeter, so dass demgemäß eine jeweilige in der Grundfläche rechteckförmige Materialaussparung in den Seitenwänden 4 und 5 eine Tiefe von circa 12 Millimeter aufweist, womit sich eine Restbodenstärke der Seitenwände 4, 5 im Bereich der jeweiligen Materialaussparung zu circa 4 Millimeter ergibt.

Fig. 3 zeigt in Alleinstellung ein Eckverbindungsorgan 22 von erfindungsgemäßen Verbindungsmitteln 21. Mit den Verbindungsmitteln 21 sind zwei Rahmenelemente 23, 24 (s. Fig. 2, 5, 6) des Möbelteil-Rahmens 16 verbindbar. Die betreffenden Eckbereiche der Möbelklappe 3 sind bezogen auf den geschlossenen Nutzzustand der Möbelklappe 3 am Oberschrank 1 oben liegend bzw. bilden einen rechten oberen Eckbereich und einen linken oberen Eckbereich. Dort greift die jeweilige Beschlageinheit 10, 11 bzw. die entsprechende jeweilige Schwenkarm-Anordnung 14 im Bereich des ersten seitlichen Rahmenelements 23 bzw. eines gegenüberliegenden zweiten seitlichen Rahmenelements der Möbelklappe 3 an, wobei zwischen den seitlichen Rahmenelementen das obere Rahmenelement 24 vorhanden ist.

Die beiden Rahmenelemente 23, 24 sind im Querschnitt Vierkant-Profile bzw. Hohlprofile beispielsweise Aluminium-Hohlprofile zum Beispiel Strangpressprofile.

Das Eckverbindungsorgan 22 ist vorzugsweise ebenfalls aus einem Metallmaterial und weist einen einstückigen Grundkörper 25 bevorzugt aus einem Vollmaterial auf, der zwei rechtwinklig zueinander ausgerichtete längliche Arme 26 und 27 aufweist.

In den Fig. 3-6 ist an dem Eckverbindungsorgan ein Anbindungsabschnitt 34 angebracht, was weiter unten erklärt ist.

Die Arme 26, 27 sind einteilig miteinander verbunden. Die Außenkontur der Arme 26, 27 ist angenähert viereckig bzw. rechteckig oder quadratisch, abhängig von der Innenform bzw. Innenkontur der hohlen Rahmenelemente 23, 24. Zumindest obere Längskanten der Arme 26, 27 sind gebrochen bzw. angefast.

Der Arm 26 ohne den Anbindungsabschnitt 34 ist leichtgängig und gegebenenfalls mit leichtem Reibwiderstand in den Endabschnitt des Rahmenelements 23 einschiebbar bzw. einsteckbar. Entsprechend ist zur Verbindung der Rahmenelemente 23, 24 der Arm 27 in den hohlen Endabschnitt des Rahmenelements 24 einsteckbar.

Auf einer bezogen auf den Nutzzustand der Oberklappe 3 innenliegenden ebenen Seite 26a des Arms 26 ist eine Einschrauböffnung 28 mit Innengewinde vorhanden, die bei funktionsrichtig eingestecktem Arm 26 in dem Rahmenelement 23 in ihrer Position mit einer Öffnung 30 auf einer innenliegenden Seite 23a des Rahmenelements 23 fluchtet, so dass eine Befestigungsschraube 32 einschraubbar ist und dabei durch die Öffnung 30 und in die Einschrauböffnung 28 bzw. deren Innengewinde greift, um das Eckverbindungsorgan 22 mit dem Rahmenelement 23 fest zu verbinden.

Entsprechend ist bezogen auf den Nutzzustand der Oberklappe 3 auf einer innenliegenden Seite 27a des Arms 27 eine Einschrauböffnung 29 mit Innengewinde vorhanden, die bei funktionsrichtig eingestecktem Arm 27 in dem Rahmenelement 24 in ihrer Position mit einer Öffnung 31 auf einer innenliegenden Seite 24a des Rahmenelements 24 fluchtet, so dass eine Befestigungsschraube 33 einschraubbar ist und dabei durch die Öffnung 31 und die Einschrauböffnung 29 bzw. deren Innengewinde greift, um das Eckverbindungsorgan 22 mit dem Rahmenelement 24 fest zu verbinden.

Die jeweiligen im spaltfreien Anlagekontakt mit Gehrung miteinander verbindbaren stirnseitigen Endbereiche der beiden Rahmenelemente 23 und 24 sind jeweils mit einem Winkel von 45 Winkelgraden zur Längsachse der jeweiligen Rahmenelemente 23, 24 ausgerichtet.

Im mit dem Grundkörper 25 des Eckverbindungsorgans 22 miteinander verbundenen Zustand der beiden Rahmenelemente 23 und 24 wird der Anbindungsabschnitt 34 am Eckverbindungsorgan 22 integriert. Hierfür wird der Anbindungsabschnitt 34 an dem Arm 26 mit zwei Schrauben 35 und 36 angeschraubt. Zum Einbringen des Anbindungsabschnitts 34 ist auf der innenliegenden Seite 23a ein fensterförmiger Ausschnitt 42 vorhanden, im Bereich zwischen der Öffnung 30 und dem schrägen stirnseitigen Endbereich des Rahmenelements 23.

Die innenliegende Seite 26a des Arms 26 weist einen tieferliegenden Bereich mit einem ebenen Boden 37 auf. Der Boden 37 ist parallel zur den benachbarten bzw. verbleibenden Bereichen der Seite 26a ausgerichtet und weist zwei in Längsrichtung des Arms 26 beabstandete bzw. versetzte Schraublöcher auf, welche in den Fig. 3-6 verdeckt sind und damit nicht ersichtlich sind.

Die Schrauben 35 und 36 sind zur Befestigung des Anbindungsabschnitts 34 vorgesehen und sind Teil von Einstellmitteln zur Einstellung einer Höhenposition und einer Seitenposition des Anbindungsabschnitts 34 am Eckverbindungsorgan 22. Damit wird bei dem fertig zusammengebauten Möbel bzw. Oberschrank 1 die Höhenposition und die Seitenposition des Möbelteils bzw. der Oberklappe 3 relativ zum Möbelkorpus 2 einstellbar.

Der Anbindungsabschnitt 34 ist beispielhaft aus einem gebogenen Blechmaterial hergestellt und als längliches Winkelelement mit zwei rechtwinklig zueinander stehenden Schenkeln 38 und 39 ausgestaltete. Der Schenkel 38, der sich mit seiner Unterseite auf dem Boden 37 abstützt, weist zwei Durchgangslöcher 40, 41 für die Schrauben 35 und 36 auf. Die jeweils als Langloch ausgebildeten Durchgangslöcher 40, 41 und die jeweils als Exzenterschrauben gestalteten Schrauben 35, 36 sind für die Einstellung der Höhenposition und der Seitenposition des Anbindungsabschnitts 34 am Eckverbindungsorgan 22 ausgestaltet.

Mit der Schraube 35 und dem Durchgangsloch 40 ist eine erste Exzenteranordnung vorhanden, mit welcher durch Drehen der Schraube 35 im oder gegen den Uhrzeigersinn die Höhenposition des Anbindungsabschnitts 34 in die beiden Höhenrichtungen gemäß des Doppelpfeils P1 einstellbar ist.

Mit der Schraube 36 und dem Durchgangsloch 41 ist eine zweite Exzenteranordnung vorhanden, mit welcher durch Drehen der Schraube 36 im oder gegen den Uhrzeigersinn die Seitenposition des Anbindungsabschnitts 34 in die beiden Seitenrichtungen gemäß des Doppelpfeils P2 einstellbar ist.

Der Schenkel 39, der quer zur Öffnung des Ausschnitts 42 steht, umfasst zwei gleichseitig abstehende bzw. nach außen vorstehende Kontaktabschnitte 43 und 44, die zur lösbaren Verrastung mit passenden Gegenabschnitten (nicht dargestellt) am möbelteilseitigen Ende der Schwenkarm-Anordnung 14 ausgestaltet sind. Hierfür stehen beide Kontaktabschnitte 43 und 44 an der Seite 23a nach außen über. Die beiden Kontaktabschnitte 43 und 44 weisen jeweils eine Rastkontur wie eine Hinterschnitt-Kontur bzw. eine Hakenkontur auf.

Auf der anderen Seite des Möbelteil-Rahmens 16, dort wo die Schwenkarm-Anordnung der weiteren Beschlageinheit 11 des Oberklappenbeschlags 9 an der Oberklappe 3 angreift, sind im Eckbereich zwischen dem oberen Rahmenelement 24 und dem dazugehörigen weiteren seitlichen Rahmenelement entsprechende Verbindungsmittel mit einem dem Eckverbindungsorgan 22 entsprechenden Eckverbindungsorgan vorhanden, so dass dort ebenfalls Kontaktabschnitte zur lösbaren Rastverbindung mit der Schwenkarm-Anordnung zur Verfügung stehen.

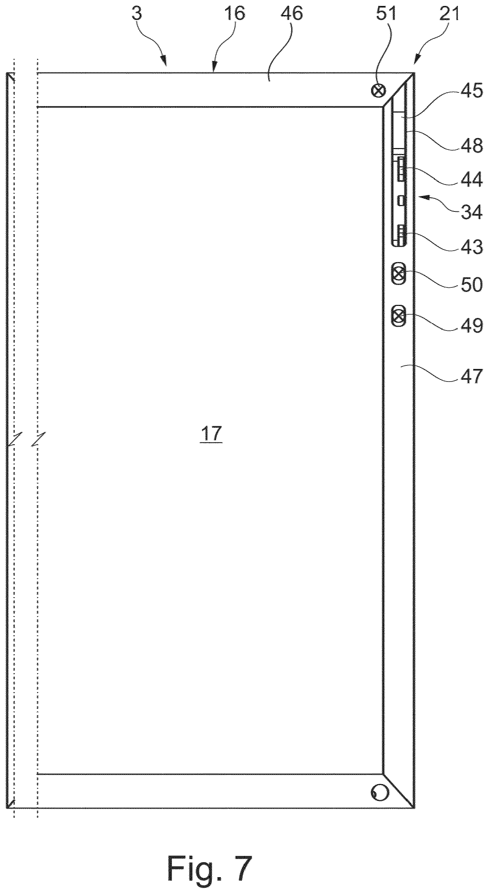

Fig. 7 zeigt eine alternatives erfindungsgemäßes Möbelteil bzw. eine alternative Oberklappe 3, die einen Möbelteil-Rahmen 16 mit einem Innenelement 17 aufweist. Der Möbelteil-Rahmen 16 weist in seinen beiden oberen Eckbereichen jeweils erfindungsgemäße Verbindungsmittel 21 mit einem Eckverbindungsorgan 45 auf, das mit seinen beiden rechtwinkligen Armen in einen Endabschnitt eines oberen Rahmenelements 46 und in einen Endabschnitt eines seitlichen Rahmenelements 47 einsteckbar und darin fixierbar ist. Am Eckverbindungsorgan 45 ist entsprechend dem Eckverbindungsorgan 22 ein Anbindungsabschnitt 34 mit zwei Kontaktabschnitten 43 und 44 ausgebildet, wobei die Kontaktabschnitten 43 und 44 vorstehend durch einen Ausschnitt 48 im Rahmenelement 47 reichen. Außerdem sind Einstellmittel zur Einstellung des Anbindungsabschnitts 34 am Eckverbindungsorgan 45 vorgesehen, die eine Schraube 49 zur Höhenposition-Einstellung, eine Schraube 50 zur Seitenposition-Einstellung, vorzugsweis jeweils mit Exzenteranordnung, und eine Schraube 51 zur Tiefenposition-Einstellung senkrecht zur Bildebene umfassen.

Eine entsprechende Anordnung auf der gegenüberliegenden Seite an der Oberklappe 3 im oberen Eckbereich innen an der Oberklappe 3 ist durch die unterbrochene Darstellung in Fig. 7 nicht ersichtlich.

**Bezugszeichenliste:**

| | | | |
|---|---|---|---|
| 1 | Oberschrank | 26a | Seite |
| 2 | Möbelkorpus | 27 | Arm |
| 3 | Oberklappe | 27a | Seite |
| 4 | Seitenwand | 28 | Einschrauböffnung |
| 5 | Seitenwand | 29 | Einschrauböffnung |
| 6 | Unterboden | 30 | Öffnung |
| 7 | Oberboden | 31 | Öffnung |
| 8 | Rückwand | 32 | Befestigungsschraube |
| 9 | Oberklappenbeschlag | 33 | Befestigungsschraube |
| 10 | Beschlageinheit | 34 | Anbindungsabschnitt |
| 11 | Beschlageinheit | 35 | Schraube |
| 12 | Basiseinheit | 36 | Schraube |
| 13 | Führungsmittel | 37 | Boden |
| 14 | Schwenkarm-Anordnung | 38 | Schenkel |
| 15 | Montageeinheit | 39 | Schenkel |
| 16 | Möbelteil-Rahmen | 40 | Durchgangsloch |
| 17 | Innenelement | 41 | Durchgangsloch |
| 18 | Abdeckelement | 42 | Ausschnitt |
| 19 | Stirnabschnitt | 43 | Kontaktabschnitt |
| 20 | Aussparung | 44 | Kontaktabschnitt |
| 21 | Verbindungsmittel | 45 | Eckverbindungsorgan |
| 22 | Eckverbindungsorgan | 46 | Rahmenelement |
| 23 | Rahmenelement | 47 | Rahmenelement |
| 23a | Seite | 48 | Ausschnitt |
| 24 | Rahmenelement | 49 | Schraube |
| 24a | Seite | 50 | Schraube |
| 25 | Grundkörper | 51 | Schraube |
| 26 | Arm | | |

## Patentansprüche

1. Verbindungsmittel (21), mit denen zwei Rahmenelemente (23, 24) eines Möbelteil-Rahmens (16) eines Möbelteils (3) verbindbar sind, wobei die Verbindungsmittel (21) ein Eckverbindungsorgan (22) für die Verbindung von jeweiligen Endabschnitten der zwei Rahmenelemente (23, 24) in einem Eckbereich des Möbelteil-Rahmens (16) umfasst, wobei am Eckverbindungsorgan (22) ein Anbindungsabschnitt (34) für die Anbindung zu einer Schwenkvorrichtung (9) integriert ist, wobei das Möbelteil (3) mittels der Schwenkvorrichtung (9) schwenkbar an einem Möbelkorpus (2) eines Möbels (1) aufnehmbar ist, dass das Eckverbindungsorgan (22) zur Unterbringung in einem Innenvolumen der zu verbindenden zwei Rahmenelemente (23, 24) des Möbelteil-Rahmens (16) ausgestaltet ist, **dadurch gekennzeichnet, dass** der Anbindungsabschnitt (34) am Eckverbindungsorgan (22) zwei vorstehende Kontaktabschnitte (43, 44) umfasst, und dass Einstellmittel zur Einstellung der Höhenposition und/oder Seitenposition des Anbindungsabschnitts (34) am Eckverbindungsorgan (22) vorhanden sind, wobei sich die vorstehenden Kontaktabschnitte mit einem Rastabschnitt der Schwenkvorrichtung verbinden lassen.

2. Verbindungsmittel nach Anspruch 1, **dadurch gekennzeichnet, dass** der Anbindungsabschnitt (34) lösbar angebracht an dem Eckverbindungsorgan (22) vorhanden ist.

3. Verbindungsmittel nach Anspruch 1 oder Anspruch 2, **dadurch gekennzeichnet, dass** das Eckverbindungsorgan (22) einen Grundkörper (25) umfasst, an dem der Anbindungsabschnitt (34) aufgenommen ist.

4. Verbindungsmittel nach Anspruch 3, **dadurch gekennzeichnet, dass** der Anbindungsabschnitt (34) auf einer Seite (37) des Grundkörpers (25) angebracht ist, welche parallel ausgerichtet ist zu einer Innenseite des mit den Rahmenelementen (23, 24) bildbaren Möbelteil-Rahmens (16) des Möbelteils (3).

5. Verbindungsmittel nach Anspruch 3 oder 4, **dadurch gekennzeichnet, dass** der Grundkörper(25) einen ersten länglichen Arm (26) und einen zweiten länglichen Arm (27) umfasst, wobei der erste Arm (26) winklig zu dem zweiten Arm (27) ausgerichtet ist.

6. Verbindungsmittel nach einem der Ansprüche 3 bis 5, **dadurch gekennzeichnet, dass** die Einstellmittel ein in den Grundkörper (25) einschraubbares Schraubelement (35, 36; 49-51) umfassen, das durch einen Führungsabschnitt wie ein Langloch (40, 41) in dem Anbindungsabschnitt (34) greift.

7. Verbindungsmittel nach einem der vorhergehenden Ansprüche, **dadurch gekennzeichnet, dass** der Anbindungsabschnitt (34) als ein längliches Winkelelement mit zwei winklig zueinander stehenden Schenkeln ausgebildet ist, wobei ein erster Schenkel (39) des Winkelelements die beiden vorstehende Kontaktabschnitte (43, 44) aufweist und an einem zweiten Schenkel (38) des Winkelelements die Einstellmittel zur Einstellung der Höhenposition und/oder Seitenposition des Anbindungsabschnitts (34) am Eckverbindungsorgan (22) wirksam sind.

8. Möbelteil (3) mit einem aus wenigstens zwei Rahmenelementen (23, 24; 46, 47) gebildeten Möbelteil-Rahmen (16), der einen Flächenbereich des Möbelteils (3) umrandet, **dadurch gekennzeichnet, dass** die Rahmenelemente (23, 24; 46, 47) mit Verbindungsmitteln (21) nach einem der vorhergehenden Ansprüche verbunden sind.

9. Möbelteil nach Anspruch 8, **dadurch gekennzeichnet, dass** die Rahmenelemente (23, 24; 46, 47) Hohlprofilabschnitte aufweisen, wobei die Verbindung der Rahmenelemente (23, 24; 46, 47) mit den Verbindungsmitteln (21) im Bereich der Hohlprofilabschnitte eingerichtet ist.

## Claims

1. Connecting means (21), to which two frame elements (23, 24) of a furniture part frame (16) of a furniture part (3) can be connected, the connecting means (21) comprising a corner connecting member (22) for the connection of respective end portions of the two frame elements (23, 24) in a corner region of the furniture part frame (16), an attachment portion (34) for the attachment to a pivoting apparatus (9) being integrated on the corner connecting member (22), it being possible for the furniture part (3) to be received on a furniture body (2) of a furniture item (1) pivotably by means of the pivoting apparatus (9), in that the corner connecting member (22) is configured for accommodation in an internal volume of the two frame elements (23, 24) of the furniture part frame (16) which are to be connected, **characterized in that** the attachment portion (34) on the corner connecting member (22) comprises two projecting contact portions (43, 44), and **in that** there are adjusting means for adjusting the vertical position and/or lateral position of the attachment portion (34) on the corner connecting member (22), it being possible for the projecting contact portions to be connected to a latching portion of the pivoting apparatus.

2. Connecting means according to Claim 1, **characterized in that** the attachment portion (34) is present in a manner which is attached releasably to the corner connecting member (22).

3. Connecting means according to Claim 1 or Claim 2, **characterized in that** the corner connecting member (22) comprises a main body (25), on which the attachment portion (34) is received.

4. Connecting means according to Claim 3, **characterized in that** the attachment portion (34) is attached on one side (37) of the main body (25), which side (37) is oriented parallel to an inner side of that furniture part frame (16) of the furniture part (3) which can be formed with the frame elements (23, 24).

5. Connecting means according to Claim 3 or 4, **characterized in that** the main body (25) comprises a first elongate arm (26) and a second elongate arm (27), the first arm (26) being oriented at an angle with respect to the second arm (27).

6. Connecting means according to one of Claims 3 to 5, **characterized in that** the adjusting means comprise a screwing element (35, 36; 49-51) which can be screwed into the main body (25) and engages through a guide portion such as a slot (40, 41) in the attachment portion (34) .

7. Connecting means according to one of the preceding claims, **characterized in that** the attachment portion (34) is configured as an elongate angled element with two limbs which are at an angle with respect to one another, a first limb (39) of the angled element having the two projecting contact portions (43, 44), and the adjusting means for adjusting the vertical position and/or lateral position of the attachment portion (34) on the corner connecting member (22) being active on a second limb (38) of the angled element.

8. Furniture part (3) with a furniture part frame (16) which is formed from at least two frame elements (23, 24; 46, 47) and borders a surface region of the furniture part (3), **characterized in that** the frame elements (23, 24; 46, 47) are connected to connecting means (21) according to one of the preceding claims.

9. Furniture part according to Claim 8, **characterized in that** the frame elements (23, 24; 46, 47) have hollow profile portions, the connection of the frame elements (23, 24; 46, 47) to the connecting means (21) being configured in the region of the hollow profile portions.

## Revendications

1. Moyens de raccordement (21), avec lesquels deux éléments de cadre (23, 24) d'un cadre de partie de meuble (16) d'une partie de meuble (3) peuvent être raccordés, les moyens de raccordement (21) comprenant un organe de raccordement de coin (22) pour le raccordement de sections d'extrémité respectives des deux éléments de cadre (23, 24) dans une zone de coin du cadre de partie de meuble (16), une section de rattachement (34) pour le rattachement à un dispositif de pivotement (9) étant intégrée à l'organe de raccordement de coin (22), la partie de meuble (3) pouvant être reçue de manière pivotante sur un corps de meuble (2) d'un meuble (1) au moyen du dispositif de pivotement (9), en ce que l'organe de raccordement de coin (22) est conçu pour être logé dans un volume intérieur des deux éléments de cadre (23, 24) à raccorder du cadre de partie de meuble (16), **caractérisés en ce que** la section de rattachement (34) sur l'organe de raccordement de coin (22) comprend deux sections de contact en saillie (43, 44), et **en ce que** des moyens de réglage sont présents pour régler la position verticale et/ou la position latérale de la section de rattachement (34) sur l'organe de raccordement de coin (22), les sections de contact en saillie pouvant être raccordées à une section d'encliquetage du dispositif de pivotement.

2. Moyens de raccordement selon la revendication 1, **caractérisés en ce que** la section de rattachement (34) est présente fixée de manière amovible sur l'organe de raccordement de coin (22).

3. Moyens de raccordement selon la revendication 1 ou la revendication 2, **caractérisés en ce que** l'organe de raccordement de coin (22) comprend un corps de base (25) sur lequel est reçue la section de rattachement (34).

4. Moyens de raccordement selon la revendication 3, **caractérisés en ce que** la section de rattachement (34) est fixée sur un côté (37) du corps de base (25) qui est orienté parallèlement à un côté intérieur du cadre de partie de meuble (16) de la partie de meuble (3) pouvant être formé avec les éléments de cadre (23, 24).

5. Moyens de raccordement selon la revendication 3 ou 4, **caractérisés en ce que** le corps de base (25) comprend un premier bras allongé (26) et un deuxième bras allongé (27), le premier bras (26) étant orienté de manière angulaire par rapport au deuxième bras (27).

6. Moyens de raccordement selon l'une quelconque des revendications 3 à 5, **caractérisés en ce que** les moyens de réglage comprennent un élément à vis (35, 36 ; 49-51) pouvant être vissé dans le corps de base (25), qui s'engage à travers une section de guidage telle qu'un trou oblong (40, 41) dans la section de rattachement (34) .

7. Moyens de raccordement selon l'une quelconque des revendications précédentes, **caractérisés en ce que** la section de rattachement (34) est configurée sous la forme d'un élément angulaire allongé avec deux branches situées de manière angulaire l'une par rapport à l'autre, une première branche (39) de l'élément angulaire présentant les deux sections de contact en saillie (43, 44), et les moyens de réglage pour régler la position verticale et/ou la position latérale de la section de rattachement (34) sur l'organe de raccordement de coin (22) étant actifs sur une deuxième branche (38) de l'élément angulaire.

8. Partie de meuble (3) comprenant un cadre de partie de meuble (16) formé d'au moins deux éléments de cadre (23, 24 ; 46, 47), qui borde une zone de surface de la partie de meuble (3), **caractérisée en ce que** les éléments de cadre (23, 24 ; 46, 47) sont raccordés par des moyens de raccordement (21) selon l'une quelconque des revendications précédentes.

9. Partie de meuble selon la revendication 8, **caractérisée en ce que** les éléments de cadre (23, 24 ; 46, 47) présentent des sections de profilé creux, le raccordement des éléments de cadre (23, 24 ; 46, 47) avec les moyens de raccordement (21) étant aménagé dans la zone des sections de profilé creux.
